# EUROPÄISCHE PATENTANMELDUNG

(11) **EP 2 234 057 A1**
(43) Veröffentlichungstag der Anmeldung: **29.09.2010**
(21) Anmeldenummer: 09004279.7
(22) Anmeldetag: 25.03.2009
(51) Int. Cl.: G06Q 30/00

(54) **Betriebssystem für einen Mehrwertdienst und Verfahren zum Betreiben eines Mehrwertdienstes**

(71) Anmelder: Out There Media Holding GmbH, 1070 Wien (AT)
(72) Erfinder: Goldscheider, Daniel, 8853 Lachen (CH)
(74) Vertreter: Konle, Tilmar

(57) **Zusammenfassung**

Zur Schaffung eines Betriebssystems für einen Mehrwertdienst, welcher einem lokalen Werbetreibendem eine schnelle Verbreitung einer Werbebotschaft an einen gezielt ausgewählten Empfängerkreis über ein Telekommunikationsnetz ermöglicht, wird ein Betriebssystem mit einem Operator vorgeschlagen, welcher über ein Telekommunikationsnetz, beispielsweise ein Mobilfunknetz, mit einer Vielzahl von Teilnehmern insbesondere per SMS kommuniziert. Die Teilnehmer werden von dem Operator befragt, ob sie Werbebotschaften gegen Entgelt empfangen wollen Die damit einverstandenen Teilnehmer senden beispielsweise als SMS eine Zustimmung an den Operator. Der Operator fragt von jedem zustimmenden Teilnehmer über das Telekommunikationsnetz persönliche Daten wie beispielsweise Name, Wohnsitz, Alter und Geschlecht ab und speichert diese persönlichen Daten als Teilnehmerprofildatei. Der Operator erhält über das Telekommunikationsnetz von Werbetreibenden beispielsweise als SMS Werbebotschaften zur gebührenpflichtigen Aussendung an jeweils eine vorgegebene Zielgruppe von Empfängern. Der Operator wählt anhand der gespeicherten Teilnehmerprofildaten eine Gruppe von Teilnehmern aus, welche der vorgegebenen Zielgruppe entspricht. Der Operator überträgt jede Werbebotschaft beispielsweise als SMS an die jeweils ausgewählte Gruppe von Teilnehmern, wobei für die Übertragung der Werbebotschaft dem Werbetreibenden eine Telekommunikationsgebühr (beispielsweise 15 Cent) pro empfangendem Teilnehmer als Mehrwertdienstleistung berechnet und dem empfangenden Teilnehmer ein Telekommunikationsbonus beispielsweise in Form von kostenlosen Kommunikationszeiten als Mehrwertdienstleistung gutgeschrieben wird.

## Beschreibung

Die Erfindung bezieht sich auf ein Betriebssystem für einen Mehrwertdienst gemäß dem Oberbegriff des Patentanspruchs 1 sowie auf ein Verfahren zum Betreiben eines Mehrwertdienstes.

Unter einem Mehrwertdienst versteht man in der öffentlichen Telekommunikation einen Dienst, der eine Telekommunikationsdienstleistung um eine weitere Dienstleistung ergänzt und beide Dienste gemeinsam abrechnet. Am häufigsten sind Telefonmehrwertdienste, bei denen ein Telefongespräch über spezielle Servicerufnummern verbunden wird. Die zusätzliche Dienstleistung wird über die Verbindungsgebühren abgerechnet. Diese Nummern eignen sich insbesondere für Dienstleistungen, die über das Telefon erbracht werden können und nach Gesprächsdauer berechnet werden, wie etwa Auskunfts- oder Beratungsdienstleistungen. Der Diensteanbieter stellt eine eigene Rechnung, die über den Telekommunikationsanbieter abgerechnet wird. Darüber hinaus gibt es noch weitere Servicenummern für eine Abrechnung von Mehrwertdiensten zu festgesetzten Tarifen, die direkt vom Telekommunikationsanbieter bestimmt und abgerechnet werden. In Mobilfunknetzen werden zunehmend auch SMS zur Abrechnung von Mehrwertdiensten eingesetzt.

Die Aufgabe der Erfindung besteht darin, ein Betriebssystem für einen Mehrwertdienst zu schaffen, welcher einem lokalen Werbetreibenden eine schnelle Verbreitung einer Werbebotschaft an einen gezielt ausgewählten Empfängerkreis über ein Telekommunikationsnetz ermöglicht.

Diese Aufgabe wird bei einem Betriebssystem mit einem Operator, welcher über ein Telekommunikationsnetz, beispielsweise ein Mobilfunknetz, mit einer Vielzahl von Teilnehmern insbesondere per SMS kommuniziert, dadurch gelöst, dass die Teilnehmer von dem Operator beispielsweise per SMS befragt werden, ob sie Werbebotschaften gegen Entgelt empfangen wollen, dass die damit einverstandenen Teilnehmer eine Zustimmung beispielsweise als SMS an den Operator senden, dass der Operator von jedem zustimmenden Teilnehmer über das Telekommunikationsnetz persönliche Daten wie beispielsweise Name, Wohnsitz, Alter und Geschlecht abfragt und diese persönlichen Daten als Teilnehmerprofildatei speichert, dass der Operator über das Telekommunikationsnetz von Werbetreibenden Werbebotschaften beispielsweise als SMS zur gebührenpflichtigen Aussendung an jeweils eine vorgegebene Zielgruppe von Empfängern erhält, dass der Operator anhand der gespeicherten Teilnehmerprofildaten eine Gruppe von Teilnehmern auswählt, welche der vorgegebenen Zielgruppe entspricht, und dass der Operator jede Werbebotschaft beispielsweise als SMS an die jeweils ausgewählte Gruppe von Teilnehmern überträgt, wobei für die Übertragung der Werbebotschaft dem Werbetreibenden eine Telekommunikationsgebühr (beispielsweise 15 Cent) pro empfangendem Teilnehmer als Mehrwertdienstleistung berechnet und dem empfangenden Teilnehmer ein Telekommunikationsbonus beispielsweise in Form von kostenlosen Kommunikationszeiten als Mehrwertdienstleistung gutgeschrieben wird.

Eine vorteilhafte Weiterbildung des erfindungsgemäßen Betriebssystems besteht darin, dass der Operator über das Telekommunikationsnetz, beispielsweise ein Mobilfunknetz, bidirektional mit einer Werbeagentur insbesondere per SMS kommuniziert und alle oder nur ausgewählte Teilnehmerprofildaten an die Werbeagentur sendet, wobei für die Übertragung der Teilnehmerprofildaten der Werbeagentur eine Telekommunikationsgebühr (beispielsweise 2 EURO) pro empfangenem Teilnehmerprofil als Mehrwertdienstleistung berechnet wird und dass der Werbeagentur von dem Operator pro Empfang einer Werbebotschaft durch einen Teilnehmer ein Teil (beispielsweise 7,5 Cent) der hierfür dem Werbetreibenden berechneten Telekommunikationsgebühr (beispielsweise 15 Cent) als Mehrwertdienstleistung gutgeschrieben wird.

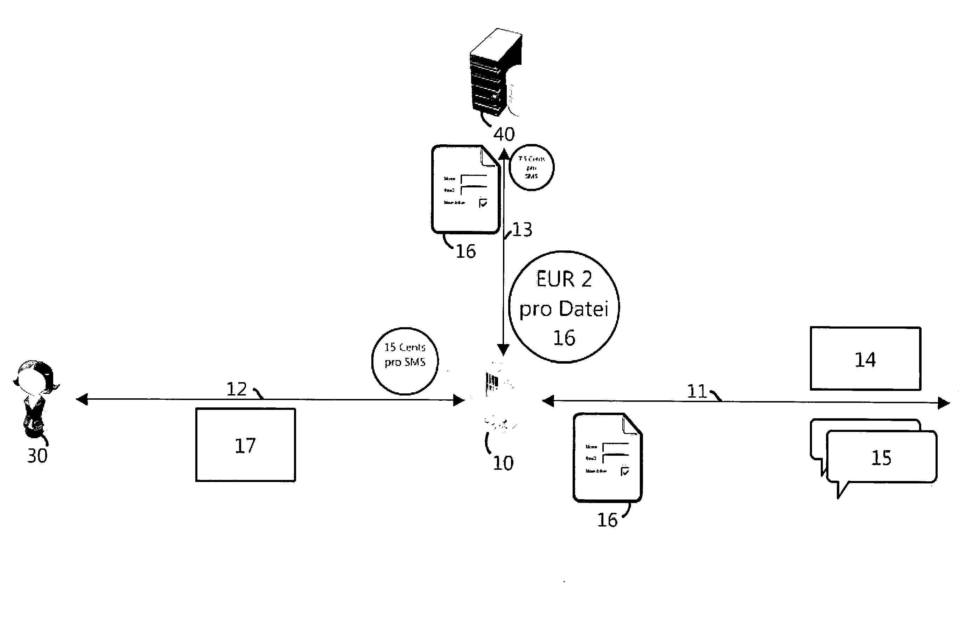

Die Erfindung wird an Hand eines in der Zeichnung dargestellten Ausführungsbeispiels näher erläutert. Die einzige Figur zeigt ein schematisiertes Blockschaltbild des erfindungsgemäßen Betriebssystems.

Das in der Figur schematisch gezeigte Betriebssystem umfasst einen Operator 10, welcher sowohl Telekommunikationsanbieter eines Telekommunikationsnetzes als auch Diensteanbieter für einen Mehrwertdienst sein kann. Der Operator 10 kommuniziert über die als bidirektionaler Pfeil angedeutete Netzverbindung 11 mit einer Vielzahl von Teilnehmern 20. Beispielsweise handelt es sich bei dem Telekommunikationsnetz um ein Mobilfunknetz und die Kommunikation mit den Teilnehmern erfolgt per SMS. Des Weiteren kommuniziert ein Werbetreibender 30 mit dem Operator 10 über eine als bidirektionaler Pfeil angedeutete Netzverbindung 12. Schließlich kommuniziert der Operator 10 über eine als bidirektionaler Pfeil angedeutete Netzverbindung 13 mit einer Werbeagentur 40.

Der Operator 10 befragt alle Teilnehmer 20 mit einer SMS 14 , ob sie Werbebotschaften per SMS empfangen und dafür als Bonus eine einmalige Prämie von beispielsweise 50 kostenlosen SMS sowie pro empfangener Werbebotschaft ein kostenlose Kommunikationszeit von beispielsweise 2 SMS oder 2 Minuten erhalten möchten. Die zustimmenden Teilnehmer 20 senden über die Netzverbindung 11 eine Bestätigungs-SMS15 an den Operator 10. Der Operator 10 fragt

anschließend über die Netzverbindung 11 von jedem zustimmenden Teilnehmer 20 persönliche Daten ab, die jeder Teilnehmer 20 als Teilnehmerprofildatei 16 per SMS an den Operator über die Netzverbindung 11 sendet. Der Operator 10 speichert alle empfangenen Teilnehmerprofildateien 16. Beispielsweise handelt es sich bei den abgefragten persönlichen Daten der Teilnehmer 20 um deren Namen, deren Wohnsitz (mit Angabe der Postleitzahl), deren Geschlecht und deren Alter.

Der Werbetreibende 30 ist beispielsweise der Inhaber einer Pizzeria in München, der um 21 Uhr noch 20 unverkaufte Pizzascheiben vorliegen hat, die er gerne noch vor Geschäftsschluss um 23 Uhr loswerden möchte. Er sendet über die Netzverbindung 12 folgende Werbebotschaft als SMS 17 an den Operator:
*"Komm in die Beispielsstrasse 10 und bekomme 2 Pizzascheiben für den Preis von 1 Pizzascheibe"*

Für die SMS-Sendung wählt der Werbetreibende 30 beispielsweise den Mehrwertdienstcode 241 80100 1970, welcher die Werbeaussage und die von dem Werbetreibenden angesprochene Zielgruppe von Pizzakunden wie folgt angibt:
241 (englische Zahlenfolge "two-four-one") bedeutet *"Zwei für Einen"*
80100 das Stadtgebiet von München mit der Postleitzahl 80100 1970 Kundenkreis von 19 Jahren bis 70 Jahre

Der Operator 10 wählt aus den gespeicherten Teilnehmerprofildateien16 die Gruppe derjenigen Teilnehmer 20 aus, auf welche die von dem Werbetreibenden 30 angegebene (gewünschte) Zielgruppe zutrifft, also im angenommenen Beispielsfall alle Teilnehmer 20, die im Stadtgebiet von München mit der Postleitzahl 80100 wohnen und ein Alter zwischen 19 und 70 Jahren haben. An diese ausgewählte Gruppe von Teilnehmern 20 sendet der Operator 10 über die Netzverbindung 11 als SMS 17 die gewünschte Werbebotschaft
*"Komm in die Beispielsstrasse 10 und bekomme 2 Pizzascheiben für den Preis von 1 Pizzascheibe".*

Für die Übertragung der Werbebotschaft berechnet der Operator 10 dem Werbetreibenden 20 als Mehrwertdienstleistung eine Telekommunikationsgebühr von beispielsweise 15 Cent pro empfangenden Teilnehmer 20, die beispielsweise über dessen

monatliche Telekommunikationsrechnung abgebucht wird. Jedem empfangenden Teilnehmer 20 schreibt der Operator 10 einen Bonus in Form einer kostenlosen Kommunikationszeit von beispielsweise 2 SMS oder 2 Minuten als Mehrwertdienstleistung gut.

Die Werbeagentur 40, welche das dargestellte Betriebssystem in verschiedenen Medien bewirbt, erhält von dem Operator 10 als Mehrwertdienstleistung alle oder nur ausgewählte Teilnehmerprofildateien 16 über die Netzverbindung 13 gegen eine Gebühr von beispielsweise 2 Euro pro Datei 16. Der Operator 10 berechnet der Werbeagentur 40 diese Mehrwertdienstleistung beispielsweise über deren Telekommunikationsrechnung. Die Werbeagentur 40 kann die Dateien 16 mit den persönlichen Daten der zustimmenden Teilnehmer 20 für Werbezwecke außerhalb des Betriebssystems verwenden. Als Ausgleich für die Bewerbung des dargestellten Betriebssystems erhält die Werbeagentur 40 von dem Operator 10 einen Teil (beispielsweise 7,5 Cent) der dem Werbetreibenden 20 pro gesendeter Werbebotschaft berechneten Telekommunikationsgebühr (beispielsweise 15 Cent) als Mehrwertdienstleistung gutgeschrieben.

## Patentansprüche

1. Betriebssystem für einen Mehrwertdienst, mit einem Operator (10), welcher über ein Telekommunikationsnetz, beispielsweise ein Mobilfunknetz, mit eine Vielzahl von Teilnehmern (20) insbesondere per SMS kommuniziert, **dadurch gekennzeichnet, dass** die Teilnehmer (20) von dem Operator (10) beispielsweise per SMS (14) befragt werden, ob sie Werbebotschaften gegen Entgelt empfangen wollen,
dass die damit einverstandenen Teilnehmer (20) beispielsweise als SMS (15) eine Zustimmung an den Operator (10) senden,
dass der Operator (10) von jedem zustimmenden Teilnehmer (20) über das Telekommunikationsnetz persönliche Daten wie beispielsweise Name, Wohnsitz, Alter und Geschlecht abfragt und diese persönlichen Daten als Teilnehmerprofildatei (16) speichert, dass der Operator (19) über das Telekommunikationsnetz von Werbetreibenden (30) Werbebotschaften beispielsweise als SMS (17) zur gebührenpflichtigen Aussendung an jeweils eine vorgegebene Zielgruppe von Empfängern (20) erhält,
dass der Operator (10) anhand der gespeicherten Teilnehmerprofildateien (16) eine Gruppe von Teilnehmern (20) auswählt, welche der vorgegebenen Zielgruppe entspricht, und
dass der Operator (10) jede Werbebotschaft beispielsweise als SMS (17) an die jeweils ausgewählte Gruppe von Teilnehmern (20) überträgt, wobei für die Übertragung der Werbebotschaft dem Werbetreibenden (30) eine Telekommunikationsgebühr (beispielsweise 15 Cent) pro empfangendem Teilnehmer (20) als Mehrwertdienstleistung berechnet und dem empfangenden Teilnehmer (20) ein Telekommunikationsbonus beispielsweise in Form von kostenlosen Kommunikationszeiten als Mehrwertdienstleistung gutgeschrieben wird.

2. Betriebssystem für einen Mehrwertdienst nach Anspruch 1, **dadurch gekennzeichnet, dass** der Operator (10) über ein Telekommunikationsnetz, beispielsweise ein Mobilfunknetz, bidirektional mit einer Werbeagentur (40) insbesondere per SMS kommuniziert und alle oder nur ausgewählte Teilnehmerprofildaten (16) an die Werbeagentur (40) sendet, wobei für die Übertragung der Teilnehmerprofildaten (16) der Werbeagentur (40) eine Telekommunikationsgebühr (beispielsweise 2 EURO) pro empfangenem Teilnehmerprofil (16) als Mehrwertdienstleistung berechnet wird und dass der Werbeagentur (40) von dem Operator (10) pro Empfang einer Werbebotschaft durch einen Teilnehmer (20) ein Teil (beispielsweise 7,5 Cent) der hierfür dem Werbetreibenden (30) berechneten Telekommunikationsgebühr (beispielsweise 15 Cent) als Mehrwertdienstleistung gutgeschrieben wird.

3. Verfahren zum Betreiben eines Mehrwertdienstes, mit einem Operator (10), welcher über ein Telekommunikationsnetz, beispielsweise ein Mobilfunknetz, mit eine Vielzahl von Teilnehmern (20) insbesondere per SMS kommuniziert, **dadurch gekennzeichnet,**
**dass** die Teilnehmer (20) von dem Operator (10) beispielsweise per SMS (14) befragt werden, ob sie Werbebotschaften gegen Entgelt empfangen wollen,
**dass** die damit einverstandenen Teilnehmer (20) beispielsweise als SMS (15) eine Zustimmung an den Operator (10) senden,
**dass** der Operator (10) von jedem zustimmenden Teilnehmer (20) über das Telekommunikationsnetz persönliche Daten wie
beispielsweise Name, Wohnsitz, Alter und Geschlecht abfragt und diese persönlichen Daten als Teilnehmerprofildatei (16) speichert, dass der Operator (19) über das Telekommunikationsnetz von Werbetreibenden (30) Werbebotschaften beispielsweise als SMS (17) zur gebührenpflichtigen Aussendung an jeweils eine vorgegebene Zielgruppe von Empfängern (20) erhält,
**dass** der Operator (10) anhand der gespeicherten Teilnehmerprofildateien (16) eine Gruppe von Teilnehmern (20) auswählt, welche der vorgegebenen Zielgruppe entspricht, und
**dass** der Operator (10) jede Werbebotschaft beispielsweise als SMS (17) an die jeweils ausgewählte Gruppe von Teilnehmern (20) überträgt, wobei für die Übertragung der Werbebotschaft dem Werbetreibenden (30) eine Telekommunikationsgebühr (beispielsweise 15 Cent) pro empfangendem Teilnehmer (20) als Mehrwertdienstleistung berechnet und dem empfangenden Teilnehmer (20) ein Telekommunikationsbonus beispielsweise in Form von kostenlosen Kommunikationszeiten als Mehrwertdienstleistung gutgeschrieben wird.

4. Verfahren nach Anspruch 3, **dadurch gekennzeichnet, dass** der Operator (10) über ein Telekommunikationsnetz, beispielsweise ein Mobilfunknetz, bidirektional mit einer Werbeagentur (40) insbesondere per SMS kommuniziert und alle oder nur ausgewählte Teilnehmerprofildaten (16) an die Werbeagentur (40) sendet, wobei für die Übertragung der Teilnehmerprofildaten (16) der Werbeagentur (40) eine Telekommunikationsgebühr (beispielsweise 2 EURO) pro empfangenem Teilnehmerprofil (16) als Mehrwertdienstleistung berechnet wird und dass der Werbeagentur (40) von dem Operator (10) pro Empfang einer Werbebotschaft durch einen Teilnehmer (20) ein Teil (beispielsweise 7,5 Cent) der hierfür dem Werbetreibenden (30) berechneten Telekommunikationsgebühr (beispielsweise 15 Cent) als Mehrwertdienstleistung gutgeschrieben wird.
